# EUROPEAN PATENT APPLICATION

(11) **EP 4 651 511 A1**
(43) Date of publication of application: **19.11.2025**
(21) Application number: 24177384.5
(22) Date of filing: 22.05.2024
(51) Int. Cl.: H04Q 9/00

(54) **MULTIPLEXING MULTIPORT DEVICE, MEASUREMENT SYSTEM AND METHOD OF ACQUIRING MEASURED SIGNALS FROM VIBRATION SENSORS.**

(30) Priority: 16.05.2024 PL 44848524
(71) Applicant: Elmodis Spolka z ograniczona odpowiedzialnoscia, 31-548 Krakow (PL)
(72) Inventor: Hanc, Artur, Krakow (PL); Swiech, Marcin, Krakow (PL)
(74) Representative: JWP Patent & Trademark Attorneys

(57) **Abstract**

The subject of the invention is a multiplexing multiport, a measuring system and a method for reading measured signals from vibration sensors using a T-type connection structure, especially in hazardous area applications. The multiplexing multiport (2), for cascade connection of measuring sensors (21, 31) to a measuring device via a measuring line, includes the main connector A of the multiplexing multiport (2) connected to the control module (1') and to the first end of the switch (2'), with the remaining at least one lead of the switch (2') being connected to one of at least two secondary connectors (B, C), the control module (1') being connected to the switch (2'). The measuring system (1), includes a measuring device connected by a signal line wire to the main connector of at least one multiport (2, 3) and is connected to at least two measuring sensors (22, 33). The measuring system includes, between the measuring device and the at least one multiplexing multiport, a control module (11) and a control line (14, 24, LC) connecting the control module to the at least one multiplexing multiport (2, 3).

## Description

The subject of the invention is a multiplexing multiport, a measuring system and a method of acquiring measured signals from vibration sensors using a T-connection structure, especially in applications for hazardous areas, such as in the presence of flammable gasses or liquid vapor, especially in coal industry facilities, petrochemical, chemical or pharmaceutical.

Patent document PL 142409 discloses an intrinsically safe vibration meter designed for assessing the condition of machinery and equipment, especially under conditions of explosive gas and dust hazards. These types of meters make it possible to study residual processes. The use of these processes in diagnostics provides an opportunity for a disassembly-free assessment of the condition of a technical machine, without the need to take it out of service. Other well-known solutions are piezoelectric vibration sensors, which allow conversion of mechanical vibrations into an electrical signal, mostly current.

Known ways of connecting vibration sensors boil down to connecting vibration sensors via collective junction boxes installed on or near the machine being monitored. Another way of feeding output signals from sensors to processing systems is to feed a full bundle of signals into a single measurement cabinet. Measuring cabinets have the option of connecting an external transducer or vibration analyzer. The device is connected via a switch and allows data to be recorded for further analysis or to analyze data from a specific sensor measurement using already existing cable connections.

The aforementioned solutions are characterized by a number of problems related mainly to the high complexity of the connection system, the high cost of connecting cables, especially in the case of extensive measurement installations or a large distance of the measurement cabinet from the monitored machine. In the case of hazardous areas, the distance from the location of the installing the sensor on the machine to the place where the signal/wire is plugged into the measurement module is usually large, as the measurement cabinet is located outside the hazardous area, which involves a large amount of wiring, its high cost, and the connection problems, e.g., in places where movement of the connecting cable together with the monitored machine is required. In the case of additional process value sensors, e.g. temperature, the installation becomes even more complex and the output signals of the transducers (sensors) are less resistant to interference.

At the same time, the monitoring system requires as much input information as possible to determine as precisely as possible the state of the monitored machine. Accordingly, systems are used to combine the output signals of vibration transducers in transition boxes, allowing signals to be collected into a single cable - minimizing the cost and complexity of the installation of interconnecting cables. In order to minimize the cost of processing, methods of multiplexing measured signals are also used in monitoring systems, allowing one measurement path to serve the appropriate number of measurement inputs, significantly minimizing the cost of the system. However, in the case of explosive atmospheres, this type of solution requires the user to verify the parameters of the system to ensure that the additional elements introduced do not have a negative impact on maintaining the required level of safety, particularly the levels of permissible voltages and currents (intrinsic safety). Another disadvantage of multiplexing solutions is the need for sequential switching of inputs according to the adopted scheme of the order of connected sensors (this is specific to this type of multiplexing devices).

From the description of the patent document JP H08149629 (application no JP 30559494) are known methods of connecting hydraulic systems using a T-type structure for easy and fast connection of electrically controlled high-pressure switch systems. The communication bus ensures the establishment of a required connection between any nodes of the communication structure. This type of structure allows easy and fast installation using dedicated T-type nodes. The use of dedicated connectors for the leads of the T-type communication node optimizes installation time while minimizing the possibility of confusion.

The EchoPlus product from PCB Piezotronics, Inc. of the United States, appearing under the IMI Sensors brand, is known to convert signals from vibration sensors connected to a single junction box into radio signals, allowing minimization of the number of connections and the possibility of connecting a remote signal analyzer. The disadvantage of this type of solution is the introduction of additional components in the signal transmission system from the sensor to the processing system, which reduces accuracy and can cause the addition of interference and delay to the usable signal transmitted from the sensor installed on the monitored machine. The solution also faces limitations due to possible interference from radio transmission.

The solutions described above boil down to centralizing sensor signals in the one or more junction boxes that allow further distribution or local measurement of vibration signal values and process signals. Vibration sensor signals, especially in hazardous areas, require long connections, usually run in a bundle together with the other elements of the system.

The invention solves the problem of running multiple cables to the measurement cabinet, and provides a reduction in the number of wired connections while providing direct access to actual readings from any of the many sensors connected to the measurement path.

Multiplexing multiport, according to the invention, for cascade connection of measuring sensors to a measuring device via a measuring line is characterized in that it includes the main connector of the multiplexing multiport connected to the control module and to the first terminal of the switch, with the remaining one or more leads of the switch being connected to one of at least two secondary connectors, the control module being connected to the switch.

It is preferable when the main connector comprises the input of an independent control wire.

It is preferable when the control wire is a signal wire, performing the control and signal functions interchangeably.

Preferably when the first secondary connector includes a signal connector, for connecting measurement sensors, and a control connector for connecting further multiports.

It is preferable when at least one of the consecutive secondary connectors comprises a signal connector, for connecting measurement sensors, and a control connector for connecting further multiports.

The measuring system, according to the invention, includes a measuring device connected by a signal line wire to the main connector of at least one multiplexing multiport according to the invention, and is connected to at least two measuring sensors and characterized by that the measuring system includes between the measuring device and at least one multiplexing multiport a control module and a control line connecting the control module to at least one multiplexing multiport, which is at least one multiplexing multiport is connected to at least two measurement sensors through corresponding at least two secondary connectors.

It is preferable when the signal line in the measurement line of the measurement system is a control line

The essence of the method of acquiring output signals from vibration sensors in the measurement system according to the invention is that before starting to read output signals, the unique addresses of multiplexing multiports are entered into the control module along with information about their position in the system structure and about the connected vibration sensors or other multiplexing multiports, then configure the multiplexing multiports to read a particular vibration sensor, then read the output signal from the vibration sensor polarized with the appropriate voltage, then reconfigure the multiplexing multiport to read any subsequent vibration sensor, and then read the output signal from the next vibration sensor polarized with the appropriate voltage, or terminate the measurement.

It is preferable when the switching is controlled from a central point by the same multi core connection cable.

It is preferable when each signal switch has at least one T-branch

It is preferable when the switched signal is an analog type signal

The advantage of the solution is the ability to attach vibration sensors in any order to the measurement path without the limitations typical for state-of-the-art multiplexers.

Another advantage of the solution is that the control line can be combined with the measurement line, thus further reducing the costs associated with the amount of wiring of connections.

The use of a T-type interconnection structure with simultaneous multiplexing of vibration measured signals at the nodes of the interconnection structure provides the opportunity to minimize installation costs and the amount of data processing equipment. The use of this type of structure also makes it possible to minimize the impact of interference on the process signals of, for example, sensors with voltage output interfaces of the type 0..1V, 0..10V, or other sensors with high-impedance output. This is because the optional measurement of process signals takes place at the node points of the interconnection structure, and the result of the measurements is transmitted to the host system. The simultaneous interconnection proposed in the invention output interfaces of vibration sensors, especially interfaces with current output, do not adversely affect the level of interference of measured signals from individual measuring points. The structure of connections allows to maintain the optimum, from the point of view of immunity to interference, configuration of sensor output-input connections measurement system.

Vibration sensors and associated temperature and/or process value signal transducers are connected using a dedicated signal switch with a T-type (or double T-type) structure to an overarching switching control module. The sensors connected in this way form a distributed multiplexer/demultiplexer system, which are:
- distributed on a machine, electromechanical unit or object signal switches with construction according to the T-type (or double T) structure,
- central control module of the switching process, which is a demultiplexer circuit, preferably providing a signal attached to one of the nodes of the T-type connection structure at the minimizing the non-influence of connections on the quality of the measurement signal, and information identifying a specific switch by means of a digital, binary or analog interface. The central control module makes it possible to present and/or share process parameter data to a host system.

The connections between the central module and the individual components of the system are carried out using wires with no large number of conductors, thus minimizing the connection time and the cost of the wiring used.

The object of the invention in the example of implementation is visualized in the drawing, where fig. 1 shows a general schematic of the measurement circuit, fig. 2 shows a schematic of a T-type multiplexing multiport, fig. 3 shows a schematic of a multiplexing multiport of the type double-T, fig. 4 shows a wiring diagram where the control line and measurement line are included, fig. 5 shows a schematic representation of the measurement path layout with multiple sensors and with measurement path, fig. 6 shows an example of the arrangement of measuring sensors on the monitored machine - an example with one multiport, fig. 7 shows an example of the arrangement of measuring sensors on the monitored machine - an example with one multiturn example with multiple multiports.

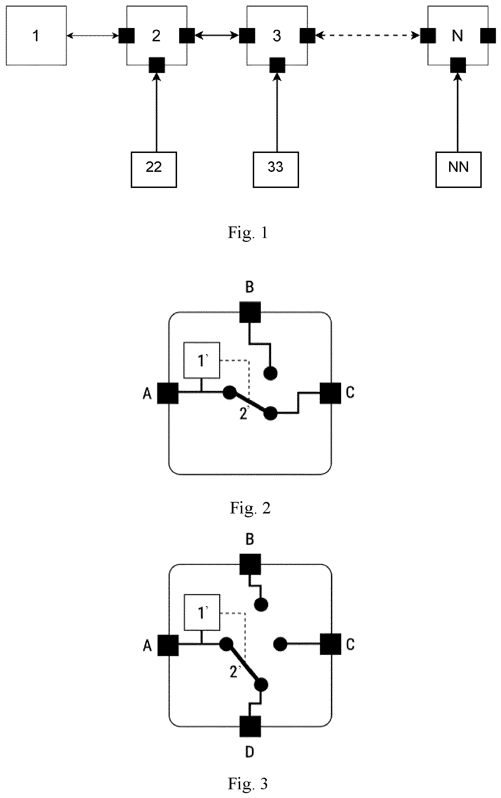

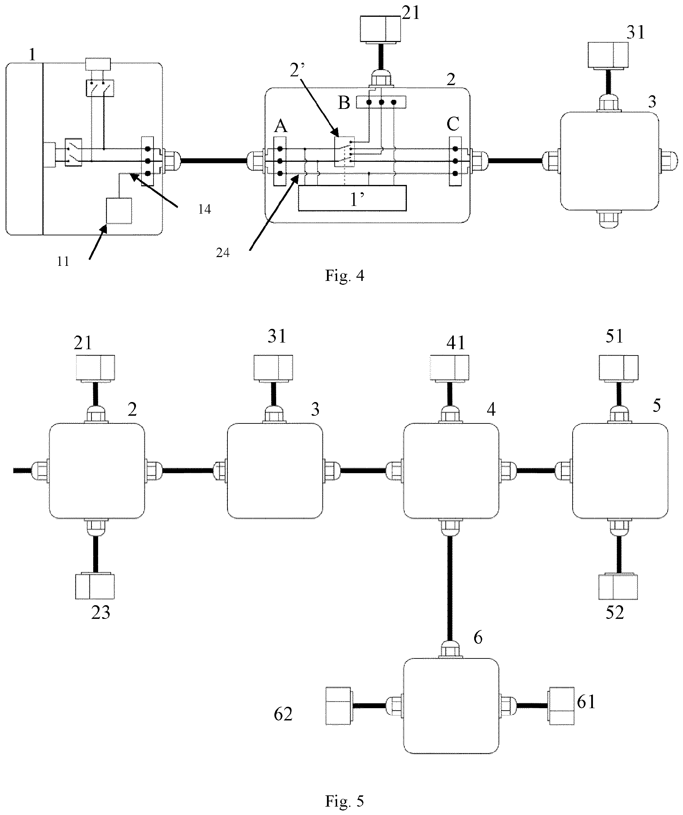

The first embodiment shown in fig. 1 shows the general concept of combining signals from multiple sensors in a network in the form of a tree. The symbols 4, 5, NN are marked measurement sensors connected to a single measurement track. The multiplexing multiport for cascading the measurement sensors to the measurement device 1 via the measurement line 11 includes a primary connector A and at least two secondary connectors B, C. In a variant of the example implementation, the multiplexing multiport includes three secondary connectors B, C, D. The multiplexing multiport 2 comprises control module 1', which controls the position of switch 2', to which it is connected. Control circuit 1' receives configuration instructions, based on which it selects one of the possible positions of the switch (2') by attaching the corresponding branch of the connection tree, which leads to the next multiplexing multiport or to the vibration sensor. Depending on the number of switch leads it connects connector A to one of connectors B or C, in a variant with two secondary outputs, or it connects connector A to one of connectors B, C or D, in a variant with three secondary outputs. Depending on the number of signal line wires, the switch 2' must be multiplexed accordingly so that it can connect one or multiple signal line wires of the selected secondary connector B, C or D. For example, fig. 4 shows a multiplexing multiport 2, in which switch 2' switches the two-wire signal line between secondary connector B or C.

In another variant of the embodiment, the main connector A comprises the input of the independent control line P and the control connector LC, which is either connected to the control module 1' or through secondary connectors and further control wires to the following multiplexing multiports. It is understood by the person skilled in the art that the control cable is not needed to connect the vibration sensor. In addition to the LC control connector, the main connector comprises the ZS signal connector. By signal connector and control connector is meant a connector comprising at least one communication contact that allows the transmission of measurement or control signals. It is obvious to the person skilled in the art that primary and secondary connectors can also include additional contacts for power wires, including ground wires.

In another variant of the embodiment, the main connector A comprises only the signal connector ZS for connecting the signal wire and putting together the measurement path. In this variant, the signal wire is also the control wire P and performs the control and signal functions interchangeably.

In another variant of the embodiment, the first secondary connector B also comprises a signal connector ZS, for connecting measurement sensors with signal wires, and a control connector ZC for connecting further multiports.

In a further variant of the multiplexing multiport embodiment, the second secondary connector C comprises a signal connector ZS, for connecting measurement sensors, and a control connector ZC for connecting further multiports.

In an even further variant of the multiplexing multiport embodiment the third secondary connector D comprises a signal connector ZS, for connecting measurement sensors, and a control connector ZC for connecting further multiports.

The measurement system according to the embodiment is connected by signal line wire 11 to the main connector A of one multiplexing multiport according to the previous embodiments, and is connected to two measurement sensors.

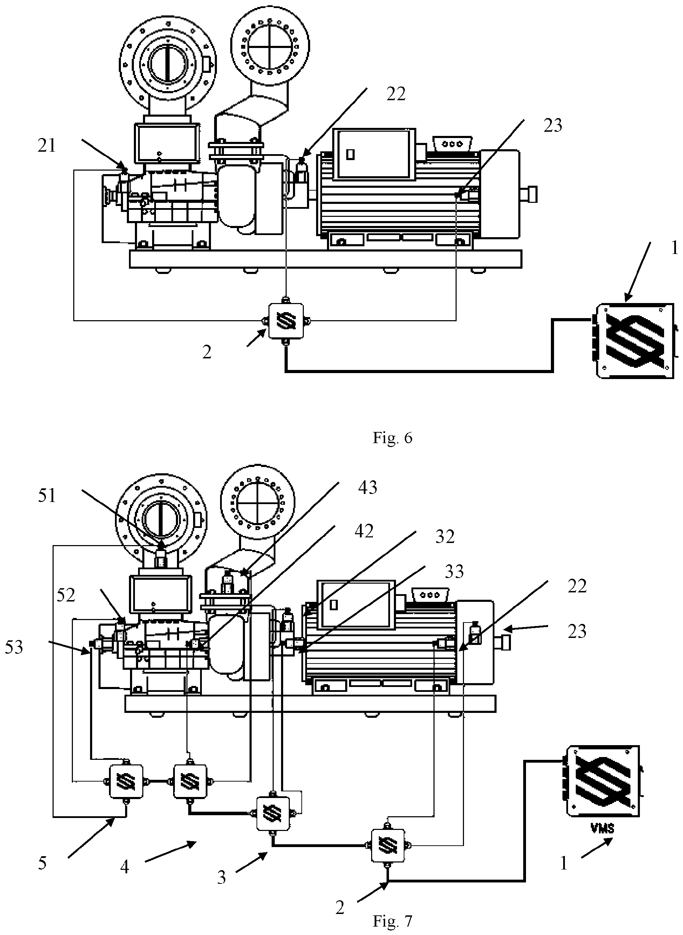

The measurement system comprises between the measurement device 1 and the multiplexing multiport 2 a control module MC and a control line LC, which connects the control module MC to the multiplexing multiport 2. The multiplexing multiport 2 is connected to the two measurement sensors 4, 5 through two secondary connectors B, C with further signal lines. It is obvious that further control lines are not needed in this example, as only the multiplexing multiports are being controlled. In a variant of this embodiment, a multiplexing multiport is connected to another multiplexing multiport 3 via secondary connector C, while a vibration sensor is connected to secondary connector B (fig. 4). The figure fig. 4 also indicates that there is no further control line connected to the secondary connector B, while the secondary connector C, to which the further multiplexing multiport 3 is connected, is control line. It is also possible to have a variant in which a further multiplexing multiport 3, 4 is connected to each secondary connector. It is obvious that a multiport having three secondary connectors B, C, D, can have 3 vibration sensors connected (fig. 6), 2 vibration sensors and one further multiport, one vibration sensor and two further multiports, or three further multiports (fig. 7). This makes it possible to create any connection architecture between the measuring device and vibration sensors located in the hazardous area while keeping the number of connections to a minimum.

In another variant of the embodiment, the LS signal line in the measurement path acts as a control line - control signals are transmitted along the same line by which transmission of measured signals from vibration sensors is carried out. The separation of control signals is on time separation, with control signals being digital signals and measured signals being analog signals. Analog measured signals differ from digital signals in their permissible voltage and current values and bandwidth frequency. In a variant of the embodiment, the vibration sensor does not work when a control signal is sent along the control line, because the voltage levels present in the digital signal are lower than the minimum required to power the vibration sensor, so that the configuration of the multiport by the control signal does not interfere with the measurement from the vibration sensors, after the configuration, the vibration sensor is polarized with a voltage suitable for reading the measurement signal and the measurement begins. By design, only one vibration sensor is connected to the measurement path at any given time via an appropriate number of multiplexing multiports (resulting from the connection structure).

Method of acquiring output signals from vibration sensors according to embodiment in the measurement system defined according to the previous embodiments, is characterized by the fact that before starting to read output signals, the unique addresses of multiplexing multiports are entered into the control module along with information about their position in the structure of the measurement system and about connected vibration sensors or other multiports. The multiplexing multiports are then configured to read a particular vibration sensor with the control signal, so that only that one particular vibration sensor is connected to the measurement path, depending on the position of the switches. The output signal from the vibration sensor is then read by polarizing it with the appropriate voltage, with the appropriate voltage being higher than the maximum voltage present in the control signal, if the control occurs only through the measurement line. The multiplexing multiports are then reconfigured to read any subsequent vibration sensor. The output signal from the next vibration sensor, polarized with the appropriate voltage, is then read out, or the measurement is terminated.

Fig. 6 and fig. 7 show an example of the arrangement of measuring sensors on the monitored machine. The bold line indicates a signal line that also serves as a control line. The lines can be independent, and can be implemented using either a single multi-conductor cable or a single two-conductor cable, with a time separation between the use of such a cable for two functions. Measuring sensors are connected to the multiport by a typical cable designed to take measurements (thin line in the figure).

In a variant of the embodiment, configuring multiplexing multiports is controlled from a central point by a control line independent of the measurement line.

In a variant of the embodiment, each multiplexing multiport has at least one T-branch, that is, it has one main connector A and two secondary connectors B and C.

## Claims

1. Multiplexing multiport for cascade connection of measuring sensors to a measuring device (1) via a measuring line (11), **characterized in that** it comprises
a main connector (A) of the multiplexing multiport (2, 3, N) being connected to a control module (1') and to the first end of a switch (2'),
wherein the remaining at least one lead of the switch (2') being connected to one of at least two secondary connectors (B, C, D), the control module (1') being connected to the switch (2').

2. Multiplexing multiport according to claim 1, **characterized in that** the main connector (A) comprises an independent control cable input (P).

3. Multiplexing multiport according to claim 2, **characterized in that the** control wire (P) is a signal cable, which performs the control and signal functions interchangeably

4. Multiplexing multiport according to claims 1 or 2 or 3, **characterized in that** the first secondary connector (B) comprises a signal connector (ZS), for connecting measurement sensors, and a control connector (ZC) for connecting further multiports.

5. Multiplexing multiport according to any of the preceding claims, **characterized in that** at least one of the further secondary connectors comprises a signal connector, for connecting measurement sensors, and a control connector for connecting further multiports.

6. Measuring system comprising the measuring device (1) connected by the signal line wire (11) with the main connector (A) of at least one multiplexing multiport specified in claim 1 and connected to at least two measuring sensors, **characterized in that** the measuring system includes between the measuring device (1) and at least one multiplexing multiport (2, 3, N) a control module (MC) and a control line (LC), connecting the control module (MC) to the at least one multiplexing multiport (2, 3, N), the at least one multiplexing multiport (2, 3, N) being connected to at least two measuring sensors (4, 5, NN) via corresponding at least two secondary connectors (B, C, D).

7. Measuring system according to claim 6, **characterized in that** the signal line (LS) in the measuring line is a control line.

8. Method of acquiring output signals from vibration sensors in the measuring system specified in any of claims 6-7, **characterized by** the fact that before starting to read the output signals, the unique addresses of the multiplexing multiports (2, 3, ..., N) are entered into the control module (1) together with information about their position in the system structure and about the connected vibration sensors (22, 33, ..., NN) or subsequent multiplexing multiports (2, 3, ..., N), then the multiplexing multiports (2, 3, ..., N) are configured to read a particular vibration sensor, then the output signal from the vibration sensor is read by polarizing it with the appropriate voltage, then the multiplexing multiports (2, 3, ..., N) are again configured to read any subsequent vibration sensor (22, 33, ..., NN), and then the output signal from the subsequent vibration sensor polarized with the appropriate voltage is read, or the measurement is terminated.

9. Method according to claim 8, **characterized in that** the switching is controlled from a central point by the same multi-core connection cable.

10. Method according to claim 8 or 9, **characterized in that** each of the signal switches has at least one T-branch.

11. Method according to claim 8 or 9 or 10, **characterized in that** the switched signal is an analog type signal
